Europäisches Patentamt

(19) European Patent Office

Office européen des brevets

(11) Publication number: **0 114 719**

**A1**

(12) # EUROPEAN PATENT APPLICATION

(21) Application number: **84300034.0**

(22) Date of filing: **04.01.84**

(51) Int. Cl.³: **B 60 R 1/06**
**F 16 H 13/06**

(30) Priority: **21.01.83 GB 8301628**

(43) Date of publication of application:
**01.08.84 Bulletin 84/31**

(84) Designated Contracting States:
**DE FR GB**

(71) Applicant: **BRITAX (WINGARD) LIMITED**
**Chandler Road**
**Chichester Sussex, PO19 2UG(GB)**

(72) Inventor: **Cunningham, Douglas James**
**"Sambourne" 4 Church Close Dunton Bassett**
**Lutterworth Leicestershire, LE16 5JY(GB)**

(72) Inventor: **Turner, Paul William**
**36 West Avenue Castle Bromwich**
**Birmingham West Midlands, B36 ODY(GB)**

(74) Representative: **Hollinghurst, Antony**
**Britax Central Services 40 Granby Avenue**
**Garretts Green Birmingham, B33 OSJ(GB)**

(54) Motorised drive for pivotally mounted element.

㉗ A motorised drive for a pivotally mounted element, such as a rear view mirror for a motor vehicle, has a reduction gear comprising a drive shaft (16), a roller (20) of resilient material mounted on the drive shaft (16) for rotation about an axis (22) which is eccentric to that of the drive shaft (16), a stationary member (12) having a concave cylindrical surface (14) coaxial with the drive shaft (16) and in engagement with a first part (24) of the periphery of the roller (20) and a driven member (30) having a concave cylindrical surface (28) of larger radius than that of the concave surface (14) of the stationary member (12). The concave surface (28) of the driven member (30) is coaxial with the drive shaft (16) and in frictional engagement with a second part (26) of the periphery of the roller (20) which is of larger radius than the first (24) thereof. Consequently, rotation of the drive shaft (16) causes rotation of the driven member (30) at reduced speed while rotation of the driven member (30) independently of the drive shaft (16) causes slipping between the roller (20) and at least one of the concave surfaces (14, 28).

FIG 1

- 1 -

"Motorised Drive for Pivotally Mounted Element"

This invention relates to an arrangement for motorised movement of a pivotally mounted element comprising a base member, a carrier for the pivotally mounted element and a drive motor connected via a reduction gear to drive the carrier. Such an arrangement is particularly but not exclusively applicable to a rear view mirror for a motor vehicle, the orientation of which can be varied electrically.

An arrangement of this type is described in Patent Specification DE-A-3045732, in which the reduction gear drives one of a pair of friction rollers between which is engaged a limb projecting from the carrier. If an attempt is made to adjust the mirror manually, the limb slips between the friction rollers without causing rotation of, or damage to, the reduction gear or its driving motor even if the latter is energised. Similarly, the friction rollers slip if the motor attempts to drive the mirror beyond its normal range of adjustment. The present invention is concerned with a mechanism of this type in which a friction clutch arrangement is incorporated into the reduction gear so that no separate arrangement of friction rollers is necessary.

According to the invention, a drive arrangement for motorised movement of a pivotally mounted element comprises a base member, a carrier for the pivotally mounted element and a drive motor connected by a reduction gear to drive the carrier, the reduction gear comprising a drive shaft, a roller of resilient material mounted on the drive shaft for rotation about an axis which is eccentric to that of the drive shaft, a stationary member having a concave cylindrical surface coaxial with the drive shaft and in engagement with a first part of the periphery of the roller, and a driven member having a concave cylindrical surface coaxial with the drive shaft and in frictional engagement with a second part of the periphery of the roller, at least one of the first and second parts of the periphery of the roller and the two concave cylindrical surfaces respectively having different radii whereby rotation of the drive shaft causes rotation of the driven member at reduced speed while rotation of the driven member independently of the drive shaft causes slipping between the roller and at least one of the concave surfaces.

In one form of the invention, the roller is mounted on an axis parallel to that of the drive shaft and comprises two cylindrical portions of different radii, each portion engaging with a respective one of the two concave cylindrical surfaces which also differ from one another in radius.

In another form of the invention, the radii of the two concave cylindrical surfaces differ slightly and the roller is mounted on an axis parallel to that of the drive shaft, the resilience of the roller accommodating the difference in radii between the two concave cylindrical surfaces.

In a third form of the invention, the roller is frustoconical in shape and mounted with its axis inclined so that the line of contact of its conical surface with the two concave cylindrical surfaces is parallel to the axis of the drive shaft, the two concave cylindrical surfaces being of the same radius.

Embodiments of the invention will be described, by way of example, with reference to the accompanying drawings in which:

Figure 1 is a part sectional view of a motor unit including a reduction gear in accordance with the invention, taken on the line 1 – 1 in Figure 2;

Figure 2 is a cross-sectional view taken on the line 2 – 2 in Figure 1;

Figure 3 is a view, similar to Figure 1 of a motor unit with an alternative form of reduction gear;

Figure 4 is a view, similar to Figure 1, of a motor unit with yet another form of reduction gear in accordance with the invention;

Figure 5 is a lateral cross-sectional view of a rear view mirror assembly incorporating a drive arrangement in accordance with the invention; and

Figure 6 is an elevational view from the back of the mirror assembly shown in Figure 1 with the case partially broken away.

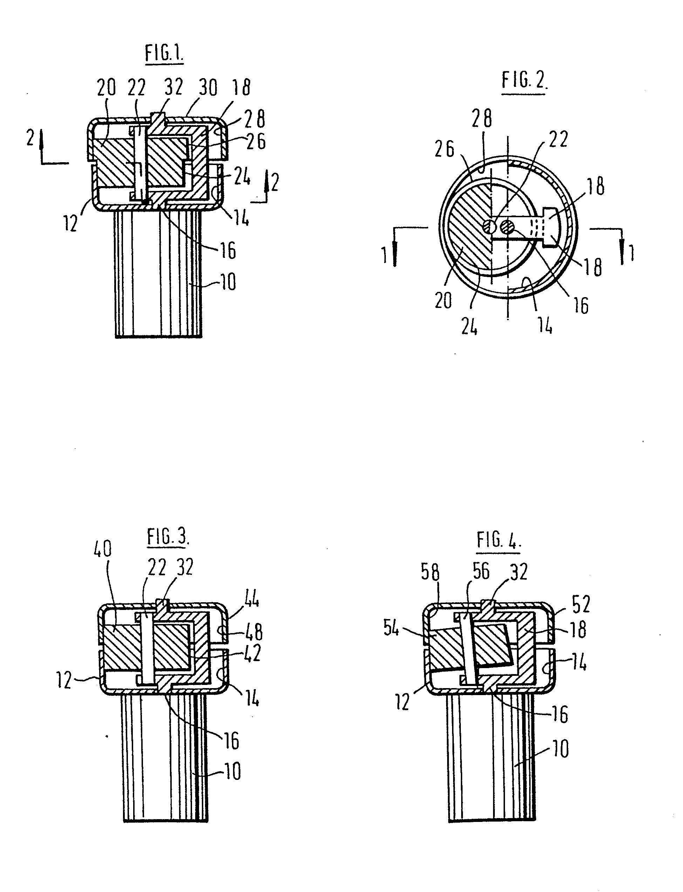

Referring first to Figures 1 and 2, an electric motor 10 has a cup-like member 12 secured to one end thereof. The cup-like member 12 has a cylindrical inner surface 14 which is coaxial with the shaft 16 of the motor 10. Mounted on the shaft 16 for rotation therewith is a yoke 18 on which is a roller 20 is eccentrically mounted for rotation about an auxiliary shaft 22. The roller 20 has two portions of different radii, the portion of smaller radius having a periphery surface 24 which engages with the inner cylindrical surface 14 of the cup-like member 12. The larger radius portion has its periphery 26 in engagement with the cylindrical inner surface 28 of a second cup-like member 30 which is journaled on a stub axle 32 carried by the yoke 18 so as to be coaxial with the shaft 16.

In use, as the shaft 16 of the motor 10 rotates, the roller 20 rolls round the cylindrical inner surface 14 of the cup-like member 12 as it rotates on its shaft 22. The cup-like member 12, is, of course, held stationary with respect to the housing of the motor 10 and consequently the larger radius cup-like member 30 rotates slowly on the stub axle 32 in the opposite direction to the shaft 16 of the motor 10 at a rate dependant on the difference between the radii of the two inner cylindrical surfaces 14 and 18. It will be appreciated that, if these two surfaces 14 and 28 had the same radius, the cup-like member 30 would not rotate and the reduction ratio would, in effect, be infinite. If the radius of the cup-like member 28 was the smaller, it would rotate in the same direction as the shaft 16.

It will be appreciated from the foregoing, that very large reduction ratios can be achieved if the difference in radius between the inner surfaces of the two cup-like members 12 and 28 is very small.

Turning to Figure 3, most of the parts illustrated are identical with the corresponding parts of the arrangement illustrated in Figures 1 and 2 and are denoted by the same reference numerals. However, the roller 22 is replaced by a roller 40 having a cylindrical surface 42 of uniform radius along its length. Journaled on the stub axle 32 is a cup-like member 44 which is formed on the same tool as the cup-like member 12 secured to the housing of the motor 10 but which has a different thickness of electro-plating thereon. For example, with a difference of about 0.01mm in plating thickness on the inner surface 48, a reduction ratio of the order of 1000:1 can be achieved.

Turning now to Figure 4, the cup-like member 52 journaled on the stub axle 32 is now identical with the cup-like member 12. The inner cylindrical surfaces of the two cup-like members 12 and 52 are engaged by the periphery of a frustoconical roller 54 which is journaled on a shaft 56 which in turn is mounted on the yoke 18 at an angle to the shaft 16 such that the line of contact of the roller 54 with the two cup-like members 12 and 52 is parallel to the axis of the shaft 16 of the motor 10. Because of the difference in radius between the parts of the roller which contact each of the two cup-like members 12 and 52, one revolution of the roller 54 causes a smaller linear displacement of the inner cylindrical surface 58 of the cup-like member 52 than of the surface 14 with the result that the cup-like member 52 rotates slowly in the opposite direction to the shaft 16 of the motor 10. With this embodiment, the reduction ratio, is, of course, dependant on the difference between the radius of that part of the roller 54 which contacts the cylindrical surface 58 and that part thereof which contacts the cylindrical surface 14, i.e. on the cone angle of the roller 54.

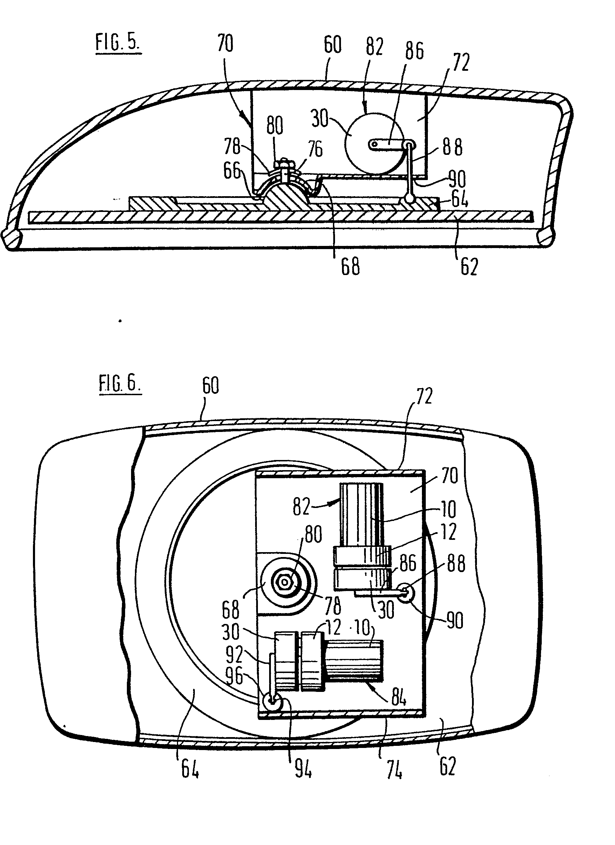

Turning now to Figures 5 and 6, an exterior rear view mirror for a motor car comprises a housing 60 adapted to be secured to the exterior of the body of a motor vehicle by fixing means which are not illustrated. The housing 60 is open on one side and contains a reflective member 62 which is supported on a carrier plate 64. The carrier plate 64 has a hemispherical protuberance 66 which engages in a complementary socket 68 carried by a U-shaped member 70, the side limbs 72 and 74 of which are secured to the interior of the housing 60. The hemispherical protuberance 66 carries a stud 76 which projects through an opening in the socket 68 and has a washer 78 and nut 80 on its free end. The reflective member 62 is thus pivotally supported by its carrier plate 64 on the bracket 70.

In order to vary the orientation of the reflective member 62 and its carrier plate 64 relative to the housing 60, a pair of motor units 82 and 84, of the type illustrated in Figures 1 and 2, are mounted on the bracket 70. The motor unit 82 has a lever 86 secured to its driven cup-like member 30. The free end of the lever 86 is pivotally coupled to a connecting rod 88 which projects through a hole 90 in the base of the bracket 70 and has its free end pivotally coupled to the carrier plate 64. Angular movement of the lever 86 thus causes angular movement of the carrier plate 64 about an axis perpendicular to the plane of Figure 5.

Similarly the second cup-like member 30 of the other motor unit 84 carries a lever 92 which has a connecting rod 94 pivotally coupled to its free end. The rod 94 projects through a hole 96 in the base of the bracket 70 so that angular movement of the cup-like member 30 of the motor unit 84 causes corresponding angular movement of the carrier 64 about an axis perpendicular to that of the angular movement caused by the first mentioned motor unit 82. Thus, the orientation of the mirror can be adjusted both in the vertical and in the horizontal direction by means of the two motor units 82 and 84.

It will be appreciated that the motor units 82 and 84 can be replaced by motor units of the type illustrated in Figure 3 or Figure 4.

CLAIMS

1. A drive arrangement for motorised movement of a pivotally mounted element (62) comprises a base member (60), a carrier (64) for the pivotally mounted element (62) and a drive motor (10) connected by a reduction gear to drive the carrier (62), characterised in that the reduction gear comprises a roller (20, 40, 54) of resilient material mounted on a drive shaft (16) for rotation about an axis (22, 56) which is eccentric to that of the drive shaft (16), a stationary member (12) having a concave cylindrical surface coaxial with the drive shaft (10) and in engagement with a first part of the periphery of the roller (20, 40, 54), and a driven member (30, 44, 52) having a concave cylindrical surface coaxial with the drive shaft (16) and in frictional engagement with a second part of the periphery of the roller (20, 40, 54) and the two concave cylindrical surfaces (14; 28, 48, 58) respectively, at least one of the first and second parts of the periphery of the roller (20, 40, 54) and the two concave cylindrical surfaces (14; 28, 48, 58) respectively having different radii whereby rotation of the drive shaft (16) causes rotation of the driven member (28, 44, 52) at reduced speed while rotation of the driven member (28, 44, 52) independently of the drive shaft (16) causes slipping between the roller (20, 40, 54) and at least one of the concave surfaces.

2. A drive arrangement according to claim 1, characterised in that the roller (20, 40) is mounted on an axis (22) parallel to that of the drive shaft (16) and the two concave cylindrical surfaces (14; 28, 48) differ from one another in radius.

3. A drive arrangement according to claim 2, characterised in that the roller (20) has two cylindrical portions (24, 26) of different radii, each portion engaging with a respective one of the two concave cylindrical surfaces (14, 28).

4. A drive arrangement according to claim 2, characterised in that the resilience of the roller (40) is sufficient to accommodate the difference in radii between the two concave cylindrical surfaces (14, 28).

5. A drive arrangement according to claim 1, characterised in that the roller (54) is frustoconical in shape and is mounted with its axis (56) inclined so that the line of contact of its conical surface with the two concave cylindrical surfaces (14, 58) is parallel to the axis of the drive shaft (16).

0114719

FIG.1.

20 22 32 30 18
28
26

2

24
2

12

14

16

10

FIG. 2.

28

26        22

18

1                    1

18

20        16
24    14

FIG.3.

40
22 32

44

48

42

12

14

16

10

FIG. 4.

58   56   32

52

54                  18

14

12

16

10

FIG.5.

FIG.6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | DE-A-2 846 586 (KIENZLE)<br>* claims 1-3; figures 1,2 *<br><br>--- | 1 | B 60 R 1/06<br>F 16 H 13/06 |
| Y | US-A-3 889 554 (SINCLAIR et al.)<br>* column 2, lines 49-63; column 4, lines 15-25; figure 3 * | 1 | |
| A | <br>* column 2, lines 52-63; column 3, line 25 - column 4, line 20; figures 7,8 *<br><br>--- | 2-5 | |
| A | FR-A-1 577 765 (KOOT)<br>* page 7, lines 2-13 *<br><br>--- | 1 | |
| A | DE-A-1 625 004 (ACKERMANN)<br>* page 1, paragraph 5; figures 1,2 *<br><br>----- | 1,5 | TECHNICAL FIELDS SEARCHED (Int. Cl. ³)<br><br>B 60 R 1/00<br>F 16 H 13/00<br>B 60 Q 1/00 |

The present search report has been drawn up for all claims

| Place of search | Date of completion of the search | Examiner |
|---|---|---|
| THE HAGUE | 16-02-1984 | OSBORNE J. |